(19) Europäisches Patentamt
European Patent Office
Office européen des brevets

(11) Veröffentlichungsnummer: **0 319 728 B1**

# (12) EUROPÄISCHE PATENTSCHRIFT

(45) Veröffentlichungstag der Patentschrift: **27.11.91**

(51) Int. Cl.5: **C09B 57/06**, G11B 7/20

(21) Anmeldenummer: **88118786.8**

(22) Anmeldetag: **11.11.88**

## (54) Naphtholactamtrimethinfarbstoffe sowie optisches Aufzeichnungsmedium, enthaltend die neuen Farbstoffe.

(30) Priorität: **17.11.87 DE 3738911**

(43) Veröffentlichungstag der Anmeldung:
**14.06.89 Patentblatt 89/24**

(45) Bekanntmachung des Hinweises auf die Patenterteilung:
**27.11.91 Patentblatt 91/48**

(84) Benannte Vertragsstaaten:
**BE CH DE FR GB IT LI NL**

(56) Entgegenhaltungen:
**EP-A- 0 102 781**
**DE-A- 3 608 214**

(73) Patentinhaber: **BASF Aktiengesellschaft**
**Carl-Bosch-Strasse 38**
**W-6700 Ludwigshafen(DE)**

(72) Erfinder: **Dust, Matthias, Dr.**
**Teichgasse 7**
**W-6700 Ludwigshafen(DE)**
Erfinder: **Neumann, Peter, Dr.**
**Poststrasse 28**
**W-6800 Mannheim(DE)**
Erfinder: **Acker, Michael, Dr.**
**Glockenzehnten 45**
**W-6900 Heidelberg-Kirchheim(DE)**
Erfinder: **Benthack-Thoms, Heidi, Dr.**
**Wilhelm-Busch-Strasse 18**
**W-6703 Limburgerhof(DE)**
Erfinder: **Schomann, Klaus-Dieter, Dr.**
**Kopernikusstrasse 47**
**W-6700 Ludwigshafen(DE)**
Erfinder: **Kuppelmaier, Harald**
**Kuehlergrund 30**
**W-6900 Heidelberg(DE)**

EP 0 319 728 B1

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Rank Xerox (UK) Business Services

## Beschreibung

Die vorliegende Erfindung betrifft neue Naphtholactamtrimethinfarbstoffe, die ein Cyclopentenbarbitursäurederivat als Kettenglied aufweisen, sowie ein optisches Aufzeichnungsmedium, das die neuen Naphtholactamtrimethinfarbstoffe enthält.

Optische Speichermaterialien, die mit energiereicher Strahlung, z. B. Laserlicht, lokal begrenzte Zustandsänderungen und damit Änderungen ihrer optischen Eigenschaften erfahren, sind bekannt. Diese thermisch ausgelösten Zustandsänderungen können zur Informations- und Datenaufzeichnung verwandt werden.

Als Aufzeichnungsmaterialien für diese Art der Informationsspeicherung dienen beispielsweise dünne Schichten aus Metallen (auch Legierungen) oder Farbstoffen. Farbstoffe besitzen gegenüber metallischen Schichten den Vorzug höherer Stabilität in der Schicht.

In optischen Speichersystemen, die für den Betrieb mit Halbleiterinjektionslasern, die im Wellenlängenbereich von 750 bis 950 nm emittieren, geeignet sind, kommen als organische IR-Farbstoffe z.B. Phthalocyaninverbindungen, Methinfarbstoffe oder Quadratsäurederivate in Betracht.

Aufgabe der Erfindung war es nun, neue Methinfarbstoffe bereitzustellen, die zur Herstellung optischer Aufzeichnungsmedien geeignet sind. Die Farbstoffe sollten günstige anwendungstechnische Eigenschaften besitzen, insbesondere sollten sie eine hohe molare Absorption aufweisen und sich gut in organischen Lösungsmitteln lösen.

Aus der EP-A-102 781 sind Cyaninfarbstoffe bekannt, deren Brükenglied ein Cyclopentenbarbitursäurederivat darstellt. Als terminale Heterocyclen kommen dabei z.B. Benzthiazol oder Indoleninderivate in Betracht.

Weiterhin beschreibt die DE-A- 3 608 214 Naphtholactammethinfarbstoffe, die über $C_3$- oder $C_5$-Brücken miteinander verknüpft sind. Als Verbindung mit einem cyclischen Brückenglied ist ein Quadratsäurederivat aufgeführt.

Die aus dem Stand der Technik bekannten Farbstoffe weisen aber häufig noch Mängel in ihrem anwendungstechnischen Eigenschaftsprofil auf.

Es wurden neue Naphtholactamtrimethinfarbstoffe der Formel I

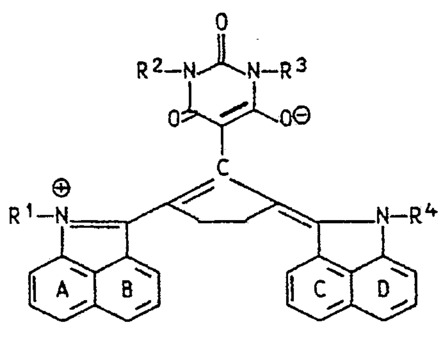

(I)

gefunden, in der

$R^1$, $R^2$, $R^3$ und $R^4$ gleich oder verschieden sind und unabhängig voneinander jeweils $C_1$-$C_{22}$-Alkyl,das gegebenenfalls substituiert und/oder durch ein oder mehrere Sauerstoffatome, eine oder mehrere Iminogruppen oder eine oder mehrere $C_1$-$C_4$-Alkyliminogruppen unterbrochen ist, gegebenenfalls substituiertes $C_5$-$C_7$-Cycloalkyl oder gegebenenfalls substituiertes Phenyl bedeuten und die Ringe A, B, C und D gegebenenfalls substituiert und/oder benzoanelliert sind.

Alle in den obengenannten Resten auftretenden Alkylgruppen können sowohl geradkettig als auch verzweigt sein.

Wenn die Reste $R^1$, $R^2$, $R^3$ und/oder $R^4$ für substituiertes $C_1$-$C_{22}$-Alkyl stehen, das gegebenenfalls durch ein oder mehrere Sauerstoffatome, eine oder mehrere Iminogruppen oder eine oder mehrere $C_1$-$C_4$-Alkyliminogruppen unterbrochen ist, kommen als Substituenten z.B. Phenyl, Halogen, Hydroxy, $C_1$-$C_4$-Alkanoyl, Carboxy, $C_1$-$C_4$-Alkanoylamino, $C_1$-$C_4$-Alkoxycarbonyl, $C_1$-$C_4$-Alkoxycarbonylamino oder N-($C_1$-$C_4$-Alkyl)anilino in Betracht.

Wenn die Reste $R^1$, $R^2$, $R^3$ und/oder $R^4$ für substituiertes $C_5$-$C_7$-Cycloalkyl stehen, kommen als Substituenten z.B. $C_1$-$C_4$-Alkyl oder Halogen, insbesondere Chlor oder Brom in Betracht.

Wenn in den Naphtholactamtrimethinfarbstoffen der Formel I substituierte Phenylgruppen auftreten,

kommen als Substituenten z.B. $C_1$-$C_4$-Alkyl, $C_1$-$C_4$-Alkoxy, Halogen, insbesondere Chlor oder Brom, oder $C_1$-$C_4$-Dialkylamino in Betracht.

Wenn in den Naphtolactamtrimethinfarbstoffen der Formel I Alkylgruppen auftreten, die durch Sauerstoff, Imino oder $C_1$-$C_4$-Alkylimino unterbrochen sind, sind solche Farbstoffe bevorzugt, bei denen diese Alkylgruppen durch 1 bis 3 Sauerstoffatome oder 1 bis 3 Imino- oder $C_1$-$C_4$-Alkyliminogruppen unterbrochen sind.

Reste $R^1$, $R^2$, $R^3$ und $R^4$ sind beispielsweise Methyl, Ethyl, Propyl, Isopropyl, Butyl, Isobutyl, sec-Butyl, tert-Butyl, Pentyl, Isopentyl, Neopentyl, tert-Pentyl, Hexyl, 2-Methylpentyl, Heptyl, Octyl, 2-Ethylhexyl, Isooctyl, Nonyl, Isononyl, Decyl, Isodecyl, Undecyl, Dodecyl, Tridecyl, Isotridecyl, Tetradecyl, Pentadecyl, Hexadecyl, Heptadecyl, Octadecyl, Nonadecyl, Eicosyl, Heneicosyl, Docosyl, (die Bezeichnungen Isooctyl, Isononyl, Isodecyl und Isotridecyl sind Trivialbezeichnungen und stammen von den nach der Oxosynthese erhaltenen Alkoholen [vgl. dazu Ullmanns Enzyklopädie der technischen Chemie, 4. Auflage, Band 7, Seiten 215 bis 217 sowie Band 11, Seiten 435 und 436]), Benzyl, 1- oder 2-Phenylethyl, Trifluormethyl, Trichlormethyl, 1,1,1-Trifluorethyl, Heptafluorpropyl, 2-Methoxyethyl, 2-Ethoxyethyl, 2-Propoxyethyl, 2-Butoxyethyl, 2-Benzyloxyethyl, 2-Ethoxypropyl, 3-Ethoxypropyl, 3-Benzyloxypropyl, 3,6-Dioxaheptyl, 3,6-Dioxaoctyl, 3,6-Dioxadecyl, 3,6,9-Trioxadecyl, 4-Oxa6-ethyldecyl, 3,6-Dioxa-7-phenylheptyl, Propan-2-on-1-yl, Butan-3-on-1-yl, Butan-3-on-2-yl, 2-Ethylpentan-3-on-1-yl, Carboxymethyl, 2-Carboxyethyl, 3-Carboxypropyl, 4-Carboxybutyl, 5-Carboxypentyl, 4-Carboxy-3-oxabutyl, Acetylaminomethyl, 2-(Acetylamino)ethyl, 2-(Propionylamino)ethyl, 2-(Butyrylamino)ethyl, Ethoxycarbonylmethyl, 2-(Ethoxycarbonyl)ethyl, 2- oder 3-(Methoxycarbonyl)propyl, Ethoxycarbonylaminomethyl, 2-(Ethoxycarbonylamino)ethyl, N-Methylanilinomethyl, 2-(N-Isopropylanilino)ethyl, 2-Hydroxyethyl, 2-Hydroxypropyl, 3-Hydroxypropyl, 2-Hydroxybutyl, 4-Hydroxybutyl, 8-Hydroxyoctyl, 3-Azabutyl, 3-Aza-3-methylbutyl, 3-Aza-3-ethylpentyl, 4-Aza-4-methylpentyl, 3-Azahexyl, 3-Azaheptyl, 3-Aza-3-butylheptyl, 3-Aza-3-(2-hydroxyethyl)heptyl, Cyclopentyl, Cyclohexyl, Cycloheptyl, 3-Methylcyclopentyl, 4-Ethylcyclohexyl, 2,3-Dichlorcyclohexyl, Phenyl, 4-Methylphenyl, 4-Isopropylphenyl, 4-Methoxyphenyl, 2,4-Dimethoxyphenyl, 2-Chlorphenyl, 4-Bromphenyl oder 4-Dimethylaminophenyl.

Wenn die Ringe A, B, C und/oder D substituiert und gegebenenfalls benzoanelliert sind, kommen als Substituenten z.B. die unter $R^1$ , $R^2$, $R^3$ und $R^4$ genannten Reste oder auch beispielsweise Halogen, insbesondere Chlor oder Brom, $C_1$-$C_{22}$-Alkoxy, das gegebenenfalls durch ein oder mehrere Sauerstoffatome unterbrochen und/oder durch Phenyl substituiert ist, Nitro, Cyano, $C_1$-$C_4$-Mono- oder Dialkylamino, 1-Azacycloalkyl, $C_1$-$C_{20}$-Alkylthio, $C_1$-$C_4$-Alkylsulfonyl, $C_1$-$C_4$-Alkoxysulfonyl, gegebenenfalls substituiertes Phenylsulfonyl, Hydroxysulfonyl, Anilino, N-($C_1$-$C_4$-Alkyl)-anilino, $C_1$-$C_4$-Alkanoyl, $C_1$-$C_4$-Alkanoylamino, $C_1$-$C_4$-Alkoxycarbonyl, $C_1$-$C_4$-Aloxycarbonylamino, Carbamoyl, $C_1$-$C_4$-Mono- oder Dialkylcarbamoyl, Sulfamoyl, $C_1$-$C_4$-Mono- oder Dialkylsulfamoyl, Ureido, durch $C_1$-$C_4$-Alkyl substituiertes Ureido, Phenoxy, Phenylthio oder der Rest

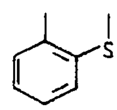

in Betracht.

1-Azacycloalkylreste sind z. B. fünf- bis siebengliedrige gesättigte Stickstoffheterocyclen, die über das Stickstoffatom gebunden sind und noch weitere Heteroatome enthalten können. Im einzelnen seien beispielsweise

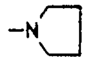 , 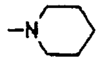 , 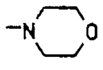 , 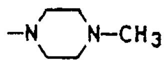 , 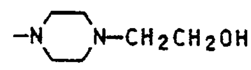 oder 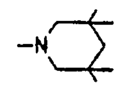

genannt.

Für beispielhafte $C_1$-$C_{22}$-Alkoxyreste, die gegebenenfalls durch Sauerstoffatome unterbrochen und/oder durch Phenyl substituiert sind, sei auf die entsprechenden beispielhaft genannten Alkylreste hingewiesen, die unter $R^1$ bis $R^4$ genannt sind.

Beispielsweise sind folgende Substitutionsmuster am Naphtholactamsystem zu nennen:

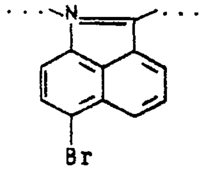 ,
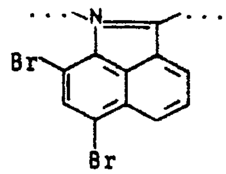 ,
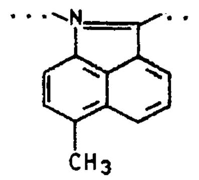 ,
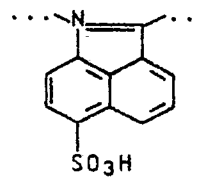 ,
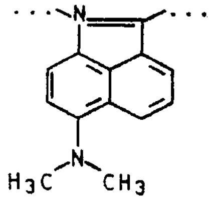 ,
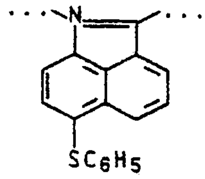 ,
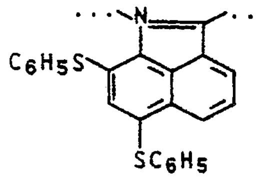 ,
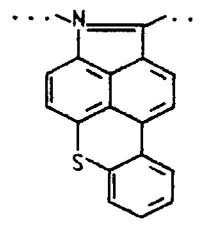 ,
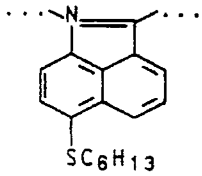 ,
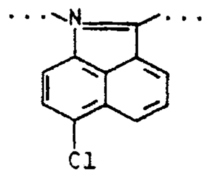 ,
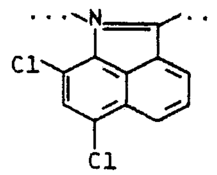 ,
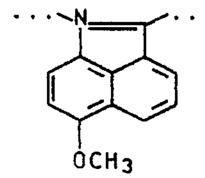 ,
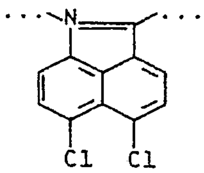 ,
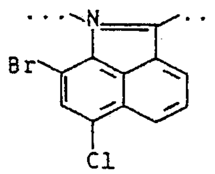 ,
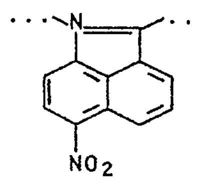 ,
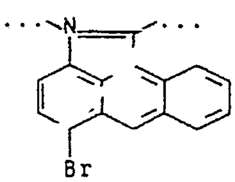 ,
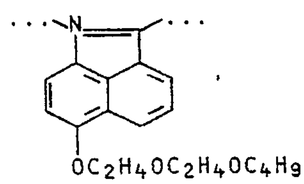 ,
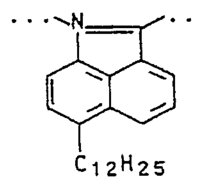 ,
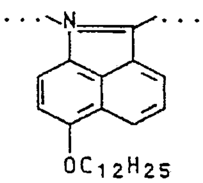 ,
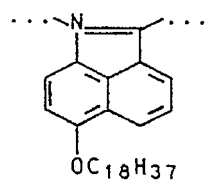 oder
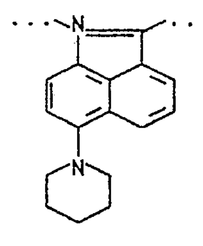 .

Bevorzugt sind Naphtholactamtrimethinfarbstoffe der Formel I, in der $R^1$ und $R^4$ unabhängig voneinander $C_1$-$C_{12}$-Alkyl, das gegebenenfalls durch ein oder zwei Sauerstoffatome unterbrochen und/oder durch Phenyl substituiert ist, und $R^2$ und $R^3$ unabhängig voneinander $C_1$-$C_{20}$-Alkyl, das gegebenenfalls durch ein oder zwei Sauerstoffatome oder ein oder zwei Iminogruppen unterbrochen und/oder durch Hydroxy, Carboxy oder $C_1$-$C_4$-Alkanoyl substituiert ist, bedeuten und die Ringe A, B, C und D unsubstituiert oder durch $C_1$-$C_{12}$-Alkyl, $C_1$-$C_{12}$-Alkoxy, das gegebenenfalls durch ein oder mehrere Sauerstoffatome unterbrochen und/oder durch Phenyl substituiert ist, Phenyl, $C_1$-$C_{10}$-Alkylthio, Cyano, $C_1$-$C_{12}$-Mono- oder Dialkylamino, 1-Azacycloalkyl, Chlor, Brom, Hydroxysulfonyl, Phenylthio oder den Rest

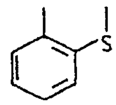

substituiert und/oder benzoanelliert sind.

Besonders bevorzugt sind Naphtholactammethinfarbstoffe der Formel I, in der $R^1$ und $R^4$ unabhängig voneinander $C_1$-$C_4$-Alkyl und $R^2$ und $R^3$ unabhängig voneinander $C_1$-$C_{10}$-Alkyl, das gegebenenfalls durch ein oder zwei Sauerstoffatome oder eine Iminogruppe unterbrochen und/oder durch Hydroxy oder Carboxy substituiert ist, bedeuten und die Ringe A, B, C und D jeweils unsubstituiert sind.

Die erfindungsgemäßen Farbstoffe werden durch Kondensation von Naphtholactamverbindung der Formel II

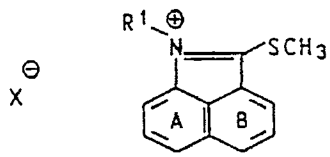 (II),

in der $R^1$, A und B jeweils die obengenannte Bedeutung besitzen und X ein Anion, z.B. Chlorid, Bromid oder Iodid, bedeutet, mit Verbindungen der Formel III

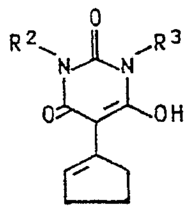 (III) ,

in der $R^2$ und $R^3$ jeweils die obengenannte Bedeutung besitzen, in einem inerten organischen Lösungsmittel, z.B. Ethanol, Propanol, Butanol oder deren Gemische, unter Zugabe einer organischen Base, z.B. Triethylamin, Pyridin oder Morpholin, bei einer Temperatur von 20 bis 120 °C hergestellt. Das Molverhältnis II:III beträgt dabei im allgemeinen 2:1 bis 4:1. Pro Mol Naphtholactam II werden in der Regel 1 bis 10 Mol organische Base verwendet.

Die als Ausgangsstoffe benötigten Naphtholactamverbindungen der Formel II sowie die Barbitursäurederivate der Formel III sind bekannt oder können nach an sich bekannten Verfahren hergestellt werden.

Die Naphtholactamtrimethinfarbstoffe der Formel I weisen eine hohe molare Absorption im Bereich von 700 bis 950 nm auf. Sie sind in organischen Lösungsmitteln und/oder thermoplastischen oder vernetzten Kunststoffen gut löslich.

Die Erfindung betrifft weiterhin ein optisches Aufzeichnungsmedium, enthaltend einen Träger sowie einen strahlungsempfindlichen, Farbstoff und gegebenenfalls Bindemittel enthaltenden dünnen Beschichtungsfilm, das dadurch gekennzeichnet ist, daß der Farbstoff ein Naphtholactamtrimethinfarbstoff der Formel I

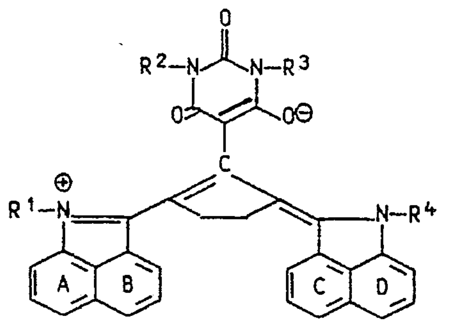

(I)

ist, in der

$R^1$, $R^2$, $R^3$ und $R^4$ gleich oder verschieden sind und unabhängig voneinander jeweils $C_1$-$C_{22}$-Alkyl, das gegebenenfalls substituiert und/oder durch ein oder mehrere Sauerstoffatome, eine oder mehrere Iminogruppen oder eine oder mehrere $C_1$-$C_4$-Alkyliminogruppen unterbrochen ist, gegebenenfalls substituiertes $C_5$-$C_7$-Cycloalkyl oder gegebenenfalls substituiertes Phenyl bedeuten und die Ringe A, B, C und D gegebenenfalls substituiert und/oder benzoanelliert sind.

Bevorzugt ist ein optisches Aufzeichnungsmedium, das einen Naphtholactamtrimethinfarbstoff der Formel I enthält, in der $R^1$ und $R^4$ unabhängig voneinander $C_1$-$C_{12}$-Alkyl, das gegebenenfalls durch ein oder zwei Sauerstoffatome unterbrochen und/oder durch Phenyl substituiert ist, und $R^2$ und $R^3$ unabhängig voneinander $C_1$-$C_{20}$-Alkyl, das gegebenenfalls durch ein oder zwei Sauerstoffatome oder eine oder zwei Iminogruppen unterbrochen und/oder durch Hydroxy, Carboxy oder $C_1$-$C_4$-Alkanoyl substituiert ist, bedeuten und die Ringe A, B, C und D unsubstituiert oder durch $C_1$-$C_{12}$-Alkyl, $C_1$-$C_{12}$-Alkoxy, das gegebenenfalls durch ein oder zwei Sauerstoffatome unterbrochen und/oder durch Phenyl substituiert ist, Phenyl, $C_1$-$C_{10}$-Alkylthio, Cyano, $C_1$-$C_{12}$-Mono- oder Dialkylamino, 1-Azacycloalkyl, Chlor, Brom, Hydroxysulfonyl, Phenylthio oder den Rest

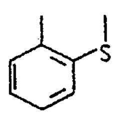

substituiert und/oder benzoanelliert sind.

Besonders bevorzugt ist ein optisches Aufzeichnungsmedium, das einen Naphtholactamtrimethinfarbstoff der Formel I enthält, in der $R^1$ und $R^4$ unabhängig voneinander $C_1$-$C_4$-Alkyl und $R^2$ und $R^3$ unabhängig voneinander $C_1$-$C_{10}$-Alkyl, das gegebenenfalls durch ein oder zwei Sauerstoffatome oder eine Iminogruppe unterbrochen und/oder durch Hydroxy oder Carboxy substituiert ist, bedeuten und die Ringe A, B, C und D jeweils unsubstituiert sind.

Der Aufbau der Aufzeichnungsmedien ist an sich bekannt.

Als Träger kommen z.B. Glasplatten oder -scheiben oder Kunststoffplatten oder -scheiben insbesondere Platten oder Scheiben aus Polymethylmethacrylat, Polystyrol, Polystyrol-Copolymeren, Polyvinylchlorid, Polymethylpenten oder Polycarbonat in Betracht, die gegebenenfalls Spurrillen aufweisen.

Der Träger kann dabei die Form eines Bandes, einer quadratischen oder rechteckigen Platte oder vorzugsweise einer runden Scheibe haben, wobei die für laseroptische Aufzeichnungsmaterialien üblichen und bekannten Scheiben eines Durchmessers von 10 oder 13 cm bevorzugt werden.

Für den Fall, daß das laseroptische Aufzeichnungsmedium ein Bindemittel enthält, kommen als Bindemittel entweder durch Strahlung oder Wärme härtbare Harze, z. B. Photopolymere, Silikonharze oder Epoxidharze oder thermoplastische Kunststoffe in Frage.

Bevorzugt sind thermoplastische Kunststoffe mit keinem oder nur sehr geringem kristallinen Anteil und Glastemperaturen von > 35 °C, insbesondere > 75 °C. Darüberhinaus müssen die Bindemittel, z.B. Harze oder thermoplastische Kunststoffe mit den Naphtholactamtrimethinfarbstoffen der Formel I gut verträglich sein. Geeignet sind beispielsweise wasserunlösliche Bindemittel mit hohem Lösungsvermögen für die Naphtholactamtrimethinfarbstoffe, wie (Meth)-Acrylatpolymere oder -copolymere, Polystyrolhomo- oder -copolymerisate, Polyvinylcarbazol, Polyvinylestercopolymere, Polyvinylchlorid oder Celluloseester.

Zwischen der strahlungsempfindlichen Schicht und dem Träger kann außerdem eine reflektierende Schicht vorhanden sein, so daß das eingestrahlte und durch die farbige Schicht wandernde Licht, soweit es

nicht absorbiert wird, an der Reflektorschicht reflektiert wird und nochmals durch die gefärbte Schicht wandert.

Die Belichtung kann auch durch ein transparentes Substrat erfolgen. Als Schichtfolge kommt dann die Anordnung Substrat-strahlungsempfindliche Schicht - gegebenenfalls Reflektorschicht in Betracht.

Geeignete lichtreflektierende Materialien sind z.B. Aluminium, Rhodium, Gold, Zinn, Blei, Wismut, Kupfer oder dielektrische Spiegel. Die lichtreflektierende Schicht sollte so dick sein, daß sie das zur Aufnahme oder zum Abtasten benutzte Licht möglichst vollständig reflektiert.

Für diesen Zweck sind Spiegel mit geringer Wärmeleitfähigkeit vorteilhaft. Der Träger oder die Licht reflektierende Schicht müssen eine optisch glatte, ebene Oberfläche aufweisen und an der Oberfläche so beschaffen sein, daß die absorbierende Schicht darauf fest haftet. Um die Oberflächenqualität und Adhäsionsphänomene günstig zu beeinflussen, kann der Träger und/oder der Reflektor mit einer Glättungsschicht aus einem duroplastischen oder thermoplastischen Material versehen werden.

Für den Fall, daß das optische Aufzeichnungsmedium einen metallischen Reflektor aufweist, erfolgt das Aufbringen der metallischen Reflektionsschicht vorzugsweise nach bekannten Methoden, z.B. durch Aufdampfen im Vakuum oder auch durch Aufbringen geeigneter Metallfolien auf den Träger.

Das Aufbringen der strahlungsempfindlichen Schicht erfolgt vorzugsweise durch Aufschleudern von gelöstem oder dispergiertem Farbstoff in Gegenwart von Bindemitteln. Auch Aufrakeln oder Tauchen kommen als Verfahren zur Herstellung der Schichten in Betracht.

Für das Aufbringen der Absorptionsschichten aus Lösung bereitet man in einem geeigneten Lösungsmittel, wie Methylenchlorid, Chloroform, Tetrachlorkohlenstoff, Aceton, Methylethylketon, Cyclohexanon, Toluol, Acetonitril, Essigester, Methanol oder Mischungen dieser Lösungsmittel, eine Lösung oder gegebenenfalls eine Dispersion des Farbstoffs oder Farbstoffgemisches und des Bindemittels zu.

Die Farbstoffzubereitung wird dann durch Rakeln oder Tauchen, vorzugsweise aber durch Aufschleudern auf ein vorher gereinigtes oder vorbehandeltes ("subbing-layer") Substrat aufgebracht und die Schicht an der Luft getrocknet oder gehärtet. Der Film kann auch im Vakuum, bei erhöhter Temperatur oder gegebenenfalls mit Strahlung, getrocknet oder gehärtet werden.

Je nach Systemaufbau wird zuerst die strahlungsempfindliche Schicht und dann der Reflektor aufgebracht oder umgekehrt verfahren. Auf das Aufbringen von Zwischen- und Schutzschichten oder einer reflektierenden Schicht kann gegebenenfalls verzichtet werden.

Wenn auf Zwischenschichten nicht verzichtet werden kann, muß unter Berücksichtigung des Brechungsindex des dazu verwendeten Materials und der verwendeten Laserlichtwellenlänge die Schichtdicke der Zwischenschichten so gewählt werden, daß keine störenden Interferenzen auftreten können.

Sofern die strahlungsempfindliche Schicht keine ausreichende mechanische Stabilität aufweist, kann diese mit einer transparenten Schutzschicht überzogen werden. Hierzu bieten sich eine Reihe von Polymeren, z.B. fluorierte Polymere an, welche durch Aufschleudern, Aufrakeln oder Tauchen von gelösten Polymeren oder durch Aufdampfen im Vakuum, aufgebracht werden können.

Wenn das System (Datenspeicher) aus zwei gleichen oder verschiedenen Aufzeichnungsmedien in Form eines "Sandwich" aufgebaut wird, kann auf eine Schutzschicht verzichtet werden. Neben größerer mechanischer und rotationsdynamischer Stabilität bietet der "Sandwich"-Aufbau den Vorteil der doppelten Speicherkapazität.

Das erfindungsgemäße Aufzeichnungsmedium hat bei der Wellenlänge der Halbleiterlaser von ca. 750 bis 950 nm eine sehr hohe Absorption. Die strahlungsempfindliche Schicht kann auf eine lichtreflektierende Schicht so aufgebracht werden, daß sich eine glatte Absorptionsschicht von hoher optischer Qualität ergibt, die eine günstige Schwellenenergie besitzt.

Die neuen Aufzeichnungsmedien sind gegenüber atmosphärischen Einflüssen und Tageslicht sehr stabil. Sie sind mit einem Halbleiter-Laser beschreibbar und lesbar. Aufgrund der hohen Lichtabsorption der Farbstoffe sind die neuen Aufzeichnungsmedien dabei sehr empfindlich gegenüber dem Licht des GaAlAs-Halbleiter-Lasers.

Die beim Absorbieren des Laserlichtes entstehende Wärme führt zu einem radial nach außen gerichteten Fließen des Thermoplastes und somit zur Ausbildung von kantenscharfen "Löchern", wodurch ein ausgezeichnetes Signal:Rausch-Verhalten erzielt wird.

Die nachfolgenden Beispiele sollen die Erfindung näher erläutern.

A. Herstellung der Farbstoffe

Beispiel 1

2 g (6 mmol) 1-Methyl-2-methylmercapto-benzo[c,d]indoliumiodid und 0,65 g (3 mmol) 5-(Cyclopent-1-en-1-yl)-1,3-dimethylbarbitursäure wurden in 35 ml absol. Ethanol mit 1,7 mmol Triethylamin 1 Stunde unter Rückfluß gekocht. Nach Beendigung der Reaktion kühlte man mehrere Stunden im Eisbad und saugte dann den Farbstoff ab. Aus der Mutterlauge konnte durch Zugabe von 50 ml Ether weiterer Farbstoff gewonnen werden. Der so erhaltene rohe Farbstoff wurde mit Aceton gewaschen und aus Methanol umkristallisiert.

Ausbeute: 1 g Farbstoff der Formel

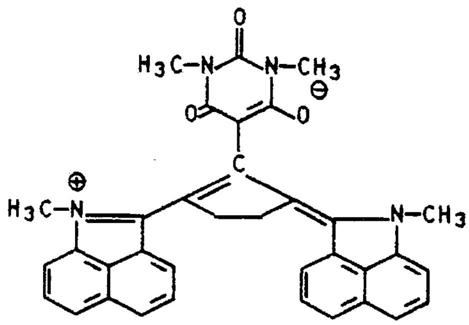

Absorptionsmaximum: 820 nm ($CH_2Cl_2$).

Beispiel 2 bis 8

Die in der folgenden Tabelle aufgeführten Farbstoffe wurden analog Beispiel 1 hergestellt. Das bei der Bestimmung des Absorptionsmaximums verwendete Lösungsmittel ist jeweils angegeben.

| Beispiel Nr. | Farbstoff | λmax [nm] |
|---|---|---|
| 2 | 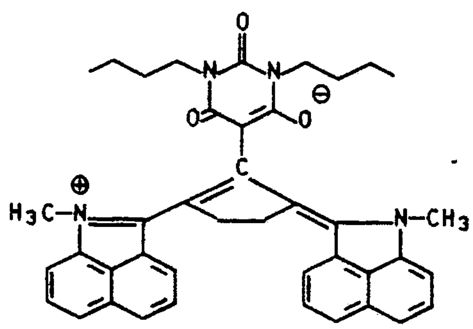 | 828 (DMF) |
| 3 | 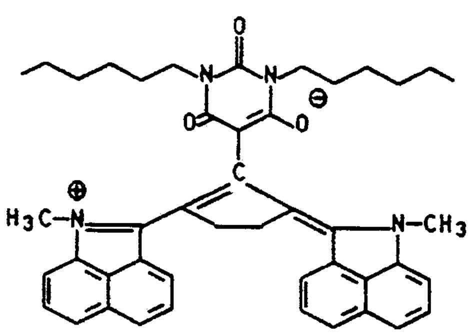 | 810 (THF) |

4

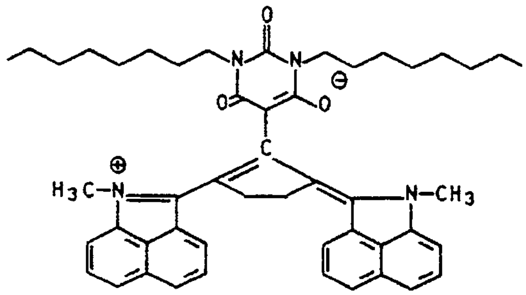

810 (THF)

5

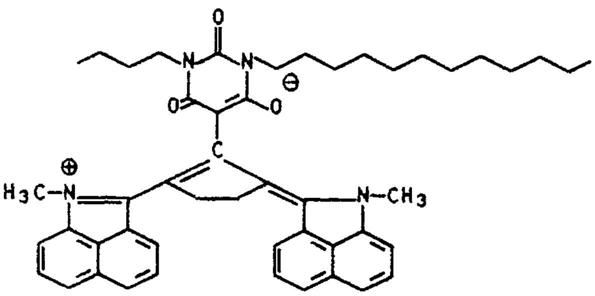

812 (THF)

6

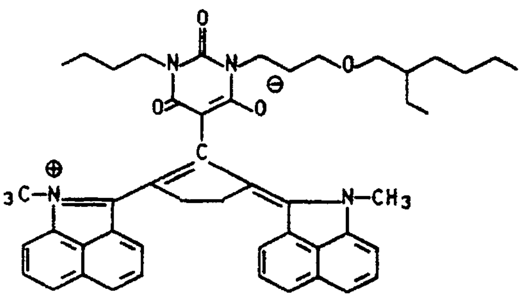

819 ($CH_2Cl_2$)

7

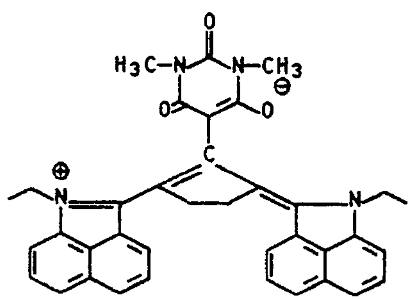

818 ($CH_2Cl_2$)

8

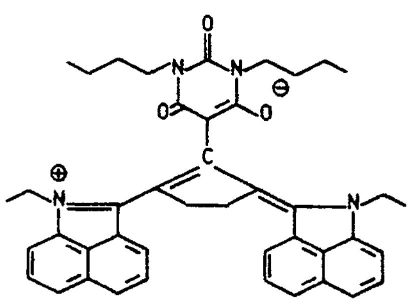

818 ($CH_2Cl_2$)

Die im folgenden aufgeführten Farbstoffe der Formel

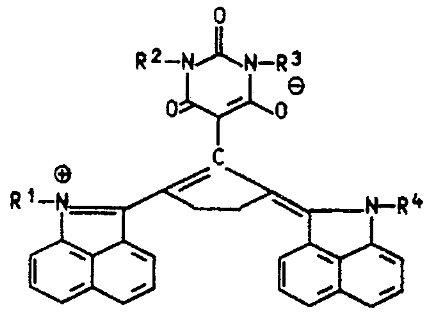

werden in analoger Weise erhalten.

| Bsp. Nr. | $R^1$ | $R^2$ | $R^3$ | $R^4$ |
|---|---|---|---|---|
| 9 | $CH_3$ | $(CH_2)_2NHCH_3$ | $(CH_2)_2NHCH_3$ | $CH_3$ |
| 10 | $C_2H_5$ | $(CH_2)_2NHCH_3$ | $(CH_2)_2NHCH_3$ | $C_2H_5$ |
| 11 | $C_2H_5$ | $(CH_2)_2NH(CH_2)_2CH_3$ | $(CH_2)_2NH(CH_2)_2CH_3$ | $C_2H_5$ |
| 12 | $C_2H_5$ | $(CH_2)_2N(CH_2CH_3)(CH_2CH_3)$ | $(CH_2)_2N(CH_2CH_3)(CH_2CH_3)$ | $C_2H_5$ |
| 13 | $CH_3$ | $(CH_2)_2N((CH_2)_3CH_3)((CH_2)_3CH_3)$ | $(CH_2)_2N((CH_2)_3CH_3)((CH_2)_3CH_3)$ | $CH_3$ |
| 14 | $CH_3$ | $(CH_2)_2NH(CH_2)_2N(CH_2CH_3)(CH_2CH_3)$ | $(CH_2)_2NH(CH_2)_2N(CH_2H_3)(CH_2CH_3)$ | $CH_3$ |
| 15 | $C_2H_5$ | $(CH_2)_2NH(CH_2)_2N(CH_2CH_3)(CH_2CH_3)$ | $(CH_2)_2NH(CH_2)_2N(CH_2CH_3)(CH_2CH_3)$ | $C_2H_5$ |
| 16 | $CH_3$ | $(CH_2)_2NH(CH_2)_2N((CH_2)_3CH_3)((CH_2)_3CH_3)$ | $(CH_2)_2NH(CH_2)_2N((CH_2)_3CH_3)((CH_2)_3CH_3)$ | $CH_3$ |
| 17 | $C_2H_5$ | $(CH_2)_2NH(CH_2)_2N((CH_2)_3CH_3)((CH_2)_3CH_3)$ | $(CH_2)_2NH(CH_2)_2N((CH_2)_3CH_3)((CH_2)_3CH_3)$ | $C_2H_5$ |

B. Herstellung des optischen Aufzeichnungsmediums

0,099 g eines Copolymers aus 70 % Methylmethacrylat und 30 % Methacrylsäure wurden in 0,302 g

Ethanol gelöst. Dazu gab man 0,23 g Farbstoff Nr. 6 sowie 6,39 g Ethanol und 1,18 g Diacetonalkohol. Man rührte 1 Stunde, filtrierte die Lösung und schleuderte bei 2000 Upm auf ein Polymethylmethacrylat-Substrat auf.

Die Schicht war homogen und ohne Fehler. Sie hatte eine Dicke von 133 nm und wies eine sehr breite Absorptionsbande auf. Bei 830 nm betrug die Extinktion 0,5.

Mit einem auf einem Drehtisch montierten AlGaAs-Laser ($\lambda$ = 820 nm) wurden einzelne, etwa 1 $\mu$ große Löcher in die aktive Schicht geschrieben. Die Empfindlichkeit der Schicht war besser als 1 nJ/Loch. Beim Auslesen der Punkte wurde ein aufgezeichnetes Signal:Rausch-Verhältnis gefunden.

## Patentansprüche

1. Naphtholactamtrimethinfarbstoffe der Formel I

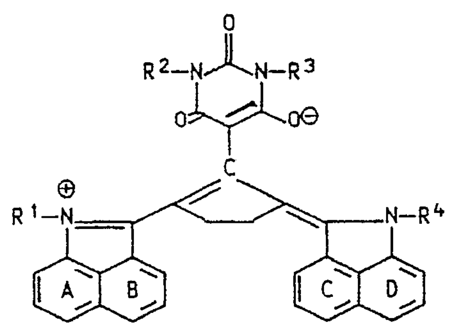

(I),

in der
$R^1$, $R^2$, $R^3$ und $R^4$ gleich oder verschieden sind und unabhängig voneinander jeweils $C_1$-$C_{22}$-Alkyl,das gegebenenfalls substituiert und/oder durch ein oder mehrere Sauerstoffatome, eine oder mehrere Iminogruppen oder eine oder mehrere $C_1$-$C_4$-Alkyliminogruppen unterbrochen ist, gegebenenfalls substituiertes $C_5$-$C_7$-Cycloalkyl oder gegebenenfalls substituiertes Phenyl bedeuten und die Ringe A, B, C und D gegebenenfalls substituiert und/oder benzoanelliert sind.

2. Naphtholactamtrimethinfarbstoffe gemäß Anspruch 1, dadurch gekennzeichnet, daß $R^1$ und $R^4$ unabhängig voneinander $C_1$-$C_{12}$-Alkyl, das gegebenenfalls durch ein oder zwei Sauerstoffatome unterbrochen und/oder durch Phenyl substituiert ist, und $R^2$ und $R^3$ unabhängig voneinander $C_1$-$C_{20}$-Alkyl, das gegebenenfalls durch ein oder zwei Sauerstoffatome oder eine oder zwei Iminogruppen unterbrochen und/oder durch Hydroxy, Carboxy oder $C_1$-$C_4$-Alkanoyl substituiert ist, bedeuten und die Ringe A, B, C und D unsubstituiert oder durch $C_1$-$C_{12}$-Alkyl, $C_1$-$C_{12}$-Alkoxy, das gegebenenfalls durch ein oder zwei Sauerstoffatome unterbrochen und/oder durch Phenyl substituiert ist, Phenyl, $C_1$-$C_{10}$-Alkylthio, Cyano, $C_1$-$C_{12}$-Mono- oder Dialkylamino, 1-Azacycloalkyl, Chlor, Brom, Hyroxysulfonyl, Phenylthio oder den Rest

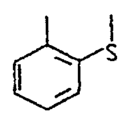

substituiert und/oder benzoanelliert sind.

3. Naphthaloctammethinfarbstoffe gemäß Anspruch 1, dadurch gekennzeichnet, daß $R^1$ und $R^4$ unabhängig voneinander $C_1$-$C_4$-Alkyl und $R^2$ und $R^3$ unabhängig voneinander $C_1$-$C_{10}$-Alkyl, das gegebenenfalls durch ein oder zwei Sauerstoffatome oder eine Iminogruppe unterbrochen und/oder durch Hydroxy oder Carboxy substituiert ist, bedeuten und die Ringe A, B, C und D jeweils unsubstituiert sind.

4. Optisches Aufzeichnungsmedium, enthaltend einen Träger sowie einen strahlungsempfindlichen, Farbstoff und gegebenenfalls Bindemittel enthaltenden Beschichtungsfilm, dadurch gekennzeichnet, daß der

Farbstoff ein Naphtholactamtrimethinfarbstoff der Formel I

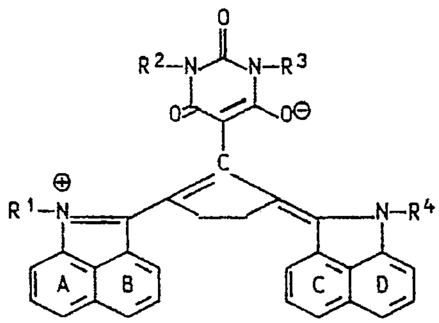

(I)

ist, in der

$R^1$, $R^2$, $R^3$ und $R^4$ gleich oder verschieden sind und unabhängig voneinander jeweils $C_1$-$C_{22}$-Alkyl,das gegebenenfalls substituiert und/oder durch ein oder mehrere Sauerstoffatome, eine oder mehrere Iminogruppen oder eine oder mehrere $C_1$-$C_4$-Alkyliminogruppen unterbrochen ist, gegebenenfalls substituiertes $C_5$-$C_7$-Cycloalkyl oder gegebenenfalls substituiertes Phenyl bedeuten und die Ringe A, B, C und D gegebenenfalls substituiert und/oder benzoanelliert sind.

5. Optisches Aufzeichnungsmedium gemäß Anspruch 4, dadurch gekennzeichnet, daß $R^1$ und $R^4$ unabhängig voneinander $C_1$-$C_{12}$-Alkyl, das gegebenenfalls durch ein oder zwei Sauerstoffatome unterbrochen und/oder durch Phenyl substituiert ist, und $R^2$ und $R^3$ unabhängig voneinander $C_1$-$C_{20}$-Alkyl, das gegebenenfalls durch ein oder zwei Sauerstoffatome oder eine oder zwei Iminogruppen unterbrochen und/oder durch Hydroxy, Carboxy oder $C_1$-$C_4$-Alkanoyl substituiert ist, bedeuten und die Ringe A, B, C und D unsubstituiert oder durch $C_1$-$C_{12}$-Alkyl, $C_1$-$C_{12}$-Alkoxy, das gegebenenfalls durch ein oder zwei Sauerstoffatome unterbrochen und/oder durch Phenyl substituiert ist, Phenyl, $C_1$-$C_{10}$-Alkylthio, Cyano, $C_1$-$C_{12}$-Mono- oder Dialkylamino, 1-Azacycloalkyl, Chlor, Brom, Hyroxysulfonyl, Phenylthio oder den Rest

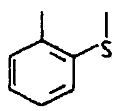

substituiert und/oder benzoanelliert sind.

6. Optisches Aufzeichnungsmedium gemäß Anspruch 4, dadurch gekennzeichnet, daß $R^1$ und $R^4$ unabhängig voneinander $C_1$-$C_4$-Alkyl, $R^2$ und $R^3$ unabhängig voneinander $C_1$-$C_{10}$-Alkyl, das gegebenenfalls durch ein oder zwei Sauerstoffatome oder eine Iminogruppe unterbrochen und/oder durch Hydroxy oder Carboxy substituiert ist, bedeuten und die Ringe A, B, C und D jeweils unsubstituiert sind.

## Claims

1. A naphtholactamtrimethine dye of the formula I

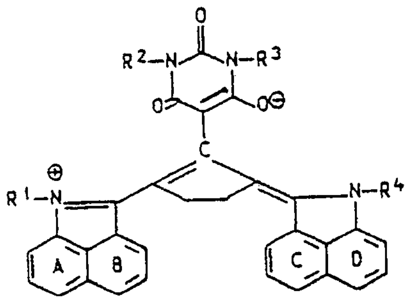

(I),

where $R^1$, $R^2$, $R^3$ and $R^4$ are identical or different and each is independently of the others $C_1$-$C_{22}$-alkyl, which may be substituted and/or interrupted by one or more oxygen atoms, one or more imino groups or one or more $C_1$-$C_4$-alkylimino groups, or is substituted or unsubstituted $C_5$-$C_7$-cycloalkyl or substituted or unsubstituted phenyl, and the rings A, B, C and D may each be substituted and/or benzofused.

2. A naphtholactamtrimethine dye as claimed in claim 1, wherein $R^1$ and $R^4$ are each independently of the other $C_1$-$C_{12}$-alkyl which may be interrupted by one or two oxygen atoms and/or substituted by phenyl, and $R^2$ and $R^3$ are each independently of the other $C_1$-$C_{20}$-alkyl which may be interrupted by one or two oxygen atoms or one or two imino groups and/or substituted by hydroxyl, carboxyl or $C_1$-$C_4$-alkanoyl, and the rings A, B, C and D are unsubstituted or substituted by $C_1$-$C_{12}$-alkyl, $C_1$-$C_{12}$-alkoxy, which may be interrupted by one or two oxygen atoms and/or substituted by phenyl, phenyl, $C_1$-$C_{10}$-alkylthio, cyano, $C_1$-$C_{12}$-monoalkyl- or -dialkylamino, 1-azacycloalkyl, chlorine, bromine, hydroxysulfonyl, phenylthio or the radical

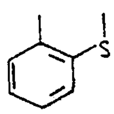

and/or benzofused.

3. A naphtholactammethine dye as claimed in claim 1, wherein $R^1$ and $R^4$ are each independently of the other $C_1$-$C_4$-alkyl and $R^2$ and $R^3$ are each independently of the other $C_1$-$C_{10}$-alkyl which may be interrupted by one or two oxygen atoms or an imino group and/or substituted by hydroxyl or carboxyl, and the rings A, B, C and D are each unsubstituted.

4. An optical recording medium containing a base and a radiation-sensitive coating film containing a dye with or without a binder, wherein the dye is a naphtholactamtrimethine dye of the formula I

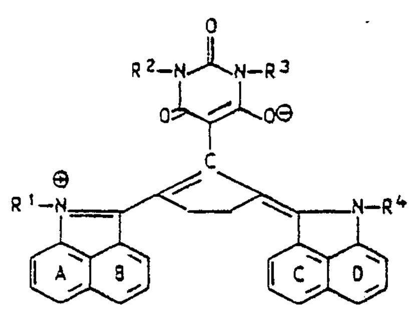

(I)

where $R^1$, $R^2$, $R^3$ and $R^4$ are identical or different and each is independently of the others $C_1$-$C_{22}$-alkyl, which may be substituted and/or interrupted by one or more oxygen atoms, one or more imino groups or one or more $C_1$-$C_4$-alkylimino groups, or is substituted or unsubstituted $C_5$-$C_7$-cycloalkyl or substituted or unsubstituted phenyl, and the rings A, B, C and D may each be substituted and/or benzofused.

5. An optical recording medium as claimed in claim 4, wherein $R^1$ and $R^4$ are each independently of the other $C_1$-$C_{12}$-alkyl which may be interrupted by one or two oxygen atoms and/or substituted by phenyl, and $R^2$ and $R^3$ are each independently of the other $C_1$-$C_{20}$-alkyl which may be interrupted by one or two oxygen atoms or one or two imino groups and/or substituted by hydroxyl, carboxyl or $C_1$-$C_4$-alkanoyl, and the rings A, B, C and D are unsubstituted or substituted by $C_1$-$C_{12}$-alkyl, $C_1$-$C_{12}$-alkoxy, which may be interrupted by one or two oxygen atoms and/or substituted by phenyl, phenyl, $C_1$-$C_{10}$-alkylthio, cyano, $C_1$-$C_{12}$-monoalkyl- or -dialkylamino, 1-azacycloalkyl, chlorine, bromine, hydroxysulfonyl,phenylthio or the radical

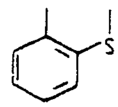

and/or benzofused.

6. An optical recording medium as claimed in claim 4, wherein $R^1$ and $R^4$ are each independently of the other $C_1$-$C_4$-alkyl, $R^2$ and $R^3$ are each independently of the other $C_1$-$C_{10}$-alkyl which may be interrupted by one or two oxygen atoms or an imino group and/or substituted by hydroxyl or carboxyl, and the rings A, B, C and D are each unsubstituted.

**Revendications**

1. Colorants naphtol-lactame-triméthiniques de la formule I

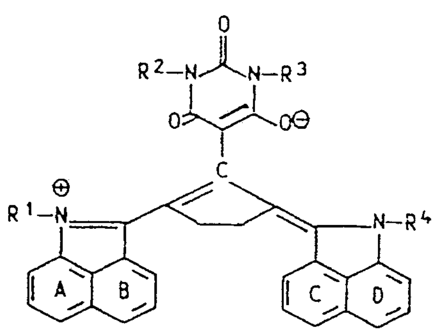

(I)

dans laquelle
$R^1$, $R^2$, $R^3$ et $R^4$ possèdent des significations identiques ou différentes et représentent, indépendamment les uns des autres, chacun un radical alkyle en $C_1$ à $c_{22}$, éventuellement substitué et/ou interrompu par un ou plusieurs atomes d'oxygène, un ou plusieurs radicaux imino, ou un ou plusieurs radicaux alkylimino en $C_1$ à $C_4$, un radical cycloalkyle en $C_5$ à $C_7$, éventuellement substitué, ou un radical phényle, éventuellement substitué et des noyaux A, B, C et D sont éventuellement substitués et/ou benzocondensés.

2. Colorants naphtol-lactame-méthiniques selon la revendication 1, caractérisés en ce que $R^1$ et $R^4$ représentent, indépendamment l'un de l'autre, chacun un radical alkyle en $C_1$ à $C_{12}$, éventuellement interrompu par un ou deux atomes d'oxygène et/ou substitué par un radical phényle et $R^2$ et $R^3$ représentent, indépendamment l'un de l'autre, chacun un radical alkyle en $C_1$ à $C_{20}$, qui est éventuellement interrompu par un ou deux atomes d'oxygène ou un ou deux radicaux imino et/ou substitué par un radical hydroxyle, carboxyle ou alcanoyle en $C_1$-$C_4$ et les noyaux A, B, C et D ne sont pas substitués, ou sont benzocondensés et/ou substitués par des radicaux alkyle en $C_1$-$C_{12}$, alcoxy en $C_1$-$C_{12}$, éventuellement interrompu par un ou deux atomes d'oxygène et/ou à substitution phénylique, phényle, alkylthio en $C_1$-$C_{10}$, cyano, mono-ou dialkylamino en $C_1$-$C_{12}$, 1-azacycloalkyle, chloro, bromo, hydroxysulfonyle, phénylthio ou des radicaux

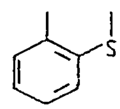

3. Colorants naphtol-lactame-méthiniques selon la revendication 1, caractérisé en ce que $R^1$ et $R^4$ représentent, indépendamment l'un de l'autre, chacun un radical alkyle en $C_1$-$C_4$ et $R^2$ et $R^3$ représentent, indépendamment l'un de l'autre, chacun un radical alkyle en $C_1$-$C_{10}$, éventuellement interrompu par un ou deux atomes d'oxygène ou un radical imino et/ou à substitution hydroxylique ou carboxylique et aucun des noyaux A, B, C et D n'est substitué.

4. Agent d'enregistrement optique, qui contient un support, comme aussi un colorant sensible aux rayonnements ou radiosensible et éventuellement une pellicule de revêtement contenant un liant, caractérisé en ce que le colorant est un colorant naphtol-lactame-triméthinique de la formule I

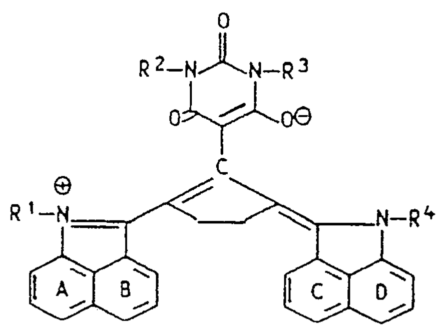

(I)

dans laquelle
$R^1$, $R^2$, $R^3$ et $R^4$ possèdent des significations identiques ou différentes et représentent, indépendamment les uns des autres, chacun un radical alkyle en $C_1$ à $C_{22}$, éventuellement substitué et/ou interrompu par un ou plusieurs atomes d'oxygène, un ou plusieurs radicaux imino, ou un ou plusieurs radicaux alkylimino en $C_1$ à $C_4$, un radical cycloalkyle en $C_5$ à $C_7$, éventuellement substitué, ou un radical phényle, éventuellement substitué et des noyaux A, B, C et D sont éventuellement substitués et/ou benzocondensés.

5. Agent ou milieu d'enregistrement optique selon la revendication 4, caractérisé en ce que $R^1$ et $R^4$ représentent, indépendamment l'un de l'autre, chacun un radical alkyle en $C_1$ à $C_{12}$, éventuellement interrompu par un ou deux atomes d'oxygène et/ou substitué par un radical phényle et $R^2$ et $R^3$ représentent, indépendamment l'un de l'autre, chacun un radical alkyle en $C_1$ à $C_{20}$, qui est éventuellement interrompu par un ou deux atomes d'oxygène ou un ou deux radicaux imino et/ou substitué par un radical hydroxyle, carboxyle ou alcanoyle en $C_1$-$C_4$ et les noyaux A, B, C et D ne sont pas substitués, ou sont benzocondensés et/ou substitués par des radicaux alkyle en $C_1$-$C_{12}$, alcoxy en $C_1$-$C_{12}$, éventuellement interrompu par un ou deux atomes d'oxygène et/ou à substitution phénylique, phényle, alkylthio en $C_1$-$C_{10}$, cyano, mono-ou dialkylamino en $C_1$-$C_{12}$, 1-azacycloalkyle, chloro, bromo, hydroxysulfonyle, phénylthio ou des radicaux

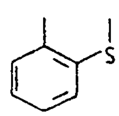

6. Colorants naphtol-lactame-méthiniques selon la revendication 4, caractérisé en ce que $R^1$ et $R^4$ représentent, indépendamment l'un de l'autre, chacun un radical alkyle en $C_1$-$C_4$ et $R^2$ et $R^3$

représentent, indépendamment l'un de l'autre, chacun un radical alkyle en $C_1$-$C_{10}$, éventuellement interrompu par un ou deux atomes d'oxygène ou un radical imino et/ou à substitution hydroxylique ou carboxylique et aucun des noyaux A, B, C et D n'est substitué.